# FASCICULE DE BREVET EUROPEEN

(11) **EP 1 541 850 B1**
(45) Date de publication et mention de la délivrance du brevet: **08.09.2010**
(21) Numéro de dépôt: 04292880.4
(22) Date de dépôt: 06.12.2004
(51) Int. Cl.: F02K 9/84

(54) **Dispositif d'adaptation pour tuyère de moteur fusée à divergent mobile**
Vorrichtung zur Anpassung einer Düse von Raketenmotor mit Schubvektorsteuerung
Device to adapt the nozzle of a rocket motor with thrust vectoring control

(30) Priorité: 10.12.2003 FR 0314454
(43) Date de publication de la demande: 15.06.2005
(73) Titulaire: Snecma Propulsion Solide, 33187 Le Haillan Cedex (FR)
(72) Inventeur: Hervio, Antoine, 33160 Saint Aubin de Medoc (FR)
(74) Mandataire: Desormiere, Pierre-Louis

(56) Documents cités:
- FR-A- 2 724 979
- US-A- 3 079 752
- US-A- 3 184 917
- US-A- 3 352 495
- US-A- 3 392 918
- US-A- 5 511 745
- US-A- 5 779 151

## Description

### Arrière plan de l'invention

La présente invention se rapporte aux tuyères orientables pour moteurs fusées. Le domaine d'application de l'invention est plus particulièrement, mais non exclusivement celui des missiles, notamment de missiles tactiques dont le diamètre est inférieur à environ 500 mm et qui sont destinés à fonctionner dans des conditions de pression externe variables. Un exemple typique de ces engins est celui du missile tactique tiré par un sous marin. Le missile est allumé à grande profondeur (environ 150m) et termine sa vie opérationnelle en phase atmosphérique après avoir effectué grâce au pilotage de la ou des tuyères une trajectoire déterminée.

La technologie utilisant un divergent mobile pour orienter la poussée présente de nombreux avantages par rapport aux autres technologies connues d'orientation de poussée telles que celles utilisant une tuyère orientable sur butée flexible, par exemple. En effet, les tuyères où seul le divergent est mobile présentent des capacités de déviation de poussée nettement supérieures à celles que l'on peut obtenir avec les tuyères orientables dans lesquelles toute la veine de tuyère est mobile. Cette amélioration de la déviation de poussée s'explique par la présence, dans la zone mobile du divergent et en configuration braquée, d'un champ de pression dissymétrique qui conduit à un coefficient d'amplification supérieur à 1 par rapport au seul effet géométrique. Cette technologie ainsi que ses avantages par rapport aux autres types de tuyères orientables sont décrits notamment dans la demande de brevet français FR 2 841 939. D'autres réalisations de tuyères orientables sont également décrites dans le document US 3 392 918.

Cependant, une telle pilotabilité ne peut être obtenue que dans l'hypothèse d'une non perturbation de l'écoulement dans la veine de la tuyère, la perturbation étant liée à la pression externe et à la nature même du milieu (liquide ou gazeux). Or, compte tenu des niveaux de pression de combustion générés aujourd'hui dans les propulseurs et du profil de détente adapté pour optimiser la poussée de celui-ci sur toute la durée de sa mission, des décollements de jet dans la zone "active" de déviation de poussée du divergent peuvent se produire en présence d'une pression externe élevée.

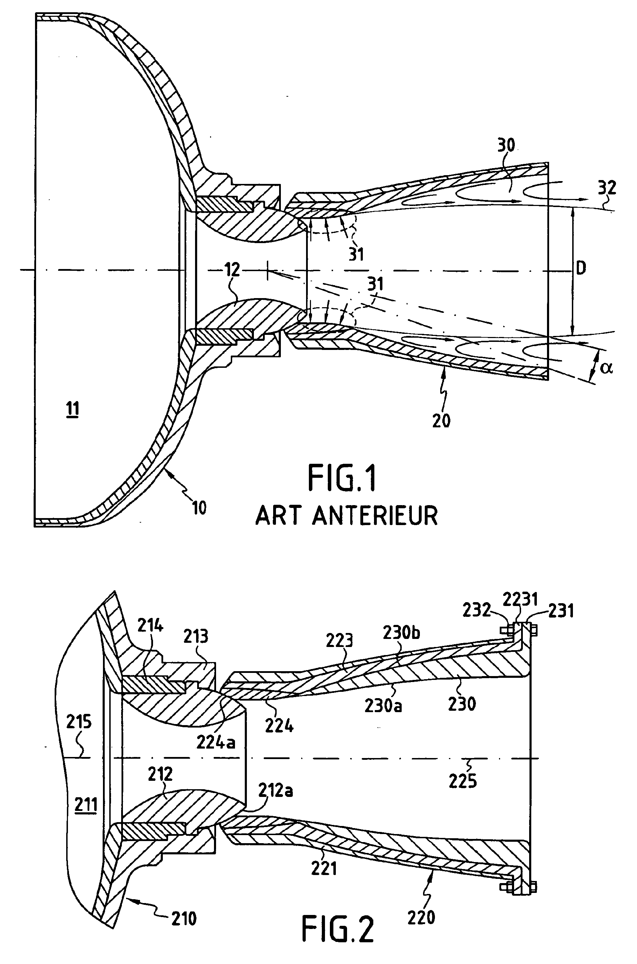

Ce phénomène est illustré sur la figure 1 qui illustre très schématiquement un moteur fusée équipé d'une tuyère à divergent mobile. Le moteur fusée comprend une enveloppe 10 entourant une chambre de combustion 11 qui débouche dans une tuyère. La tuyère 20 est formée d'un col 12 recevant les gaz chauds produits dans la chambre de combustion et d'un divergent 20. Le divergent 20 est monté de façon mobile sur le col 12 qui est solidaire du fond de l'enveloppe 10. Ainsi, le divergent est la seule partie mobile de la tuyère qui permet par son pivotement de dévier le jet des gaz de combustion issus du col afin d'orienter la trajectoire du propulseur en changeant la direction du vecteur de poussée.

Dans des conditions de pression externe élevée tel qu'en milieu sous-marin, le diamètre D du jet 32 de la tuyère rétrécit entraînant le décollement du jet de la paroi du divergent comme illustré sur la figure 1. Cela vient du fait que les tuyères sont généralement optimisées en fonction des performances globales du lanceur. A cet effet, on définit un profil de détente (i.e. variation de section dans la tuyère) en fonction d'une certaine altitude, dite altitude "d'adaptation", au dessus de laquelle se situe la majorité du vol. En dessous de cette altitude, la tuyère est surdétendue et la pression externe élevée peut provoquer le décollement du jet de la paroi du divergent.

Lorsque le jet se décolle de la paroi du divergent, il se forme une zone perturbée 30 qui s'étend du point de décollement du jet jusqu'à l'extrémité du divergent et dans laquelle remonte le fluide externe qui peut être, suivant le milieu, liquide ou gazeux. La zone d'application 31 des efforts de pression induisant en braquage l'effort latéral qui permet d'orienter la trajectoire de l'engin et qui s'étend habituellement sur toute la surface interne du divergent, se trouve cantonnée dans la partie amont du divergent, c'est-à-dire entre la sortie du col et le point de décollement du jet dans le divergent. La dissymétrie du champ de pression à l'intérieur du divergent est considérablement réduite, ce qui entraîne une diminution de l'effort latéral qui permet de diriger l'engin. L'influence de l'effort latéral sur l'orientation de l'engin est d'autant plus limitée que sa zone d'application se trouve à proximité du point d'appui du divergent sur le col (effet levier réduit). Ainsi, tant que le jet est décollé de la paroi du divergent, la pilotabilité de la tuyère reste très limitée.

D'autre part, le décollement du jet à l'intérieur de la tuyère peut entraîner des instabilités créant des sollicitations vibratoires néfastes mécaniquement.

Le problème de réduction de la pilotabilité due au décollement de jet dans le divergent est particulièrement sensible dans les tuyères à divergent mobile car ce sont les efforts appliqués sur la paroi interne du divergent qui permettent de diriger l'engin au cours de son vol. Dans les autres systèmes de tuyères orientables telles que dans les tuyères à butée flexible, c'est toute la veine de la tuyère qui se déplace. Ainsi, le jet des gaz éjectés de la chambre combustion est dévié directement à la sortie du col puisque l'axe de ce dernier est déplacé avec celui du divergent. L'orientation du vecteur poussée se fait par conséquent au niveau du col de tuyère, c'est-à-dire en amont du divergent, le décollement du jet dans le divergent n'ayant alors pratiquement pas d'influencé sur la pilotabilité de la tuyère.

Le document US 3 079 752 décrit des tuyères fixes dans lesquelles des structures de forme tronconique sont insérées afin d'optimiser le coefficient de poussée.

### Objet et description succincte de l'invention

La présente invention a pour but d'apporter une solution au problème posé par le décollement de jet dans une tuyère à divergent mobile afin de supprimer ou réduire son influence sur la pilotabilité de la tuyère.

Conformément à un premier mode de réalisation de la présente invention, ce but est atteint grâce à une structure d'adaptation qui est disposée à l'intérieur du divergent de la tuyère de façon à réduire le caractère divergent de la veine de celui-ci et à augmenter la zone d'application des efforts de pression exercés par le jet sur le divergent lors du braquage de celui-ci. Cette structure permet en effet de combler l'espace présent entre la paroi interne du divergent et le jet lors de son décollement pour maintenir un contact, via ladite structure, entre le jet et le divergent. Ainsi, même en présence d'une pression externe élevée, il est possible d'établir un champ de pression dissymétrique dans le divergent lors du braquage de celui-ci. Avec un tel dispositif, les capacités de déviation de poussée d'une tuyère à divergent mobile ne sont pas affectées par une augmentation de la pression externe.

La forme, les dimensions et la disposition de la structure d'adaptation sont de préférence choisies de manière à optimiser l'efficacité en braquage ainsi que l'impact sur les performances propulsives du moteur. La structure peut par exemple être de forme axisymétrique de révolution ou bien présenter des protubérances en forme d'ailettes disposées uniformément sur la structure au voisinage de la section de sortie des gaz du divergent. Ainsi, même en présence d'un décollement de jet celui-ci peut être "accroché" par des ailettes.

La structure peut être présente pendant toute la durée du vol ou disparaître à un instant déterminé pour retrouver la configuration normale du divergent. Dans ce dernier cas, la structure est fixée au divergent par des moyens de liaison auxquels sont associés des moyens, par exemple pyrotechniques, permettant de commander la rupture des moyens de liaison un temps déterminé après la mise à feu. La structure peut être constituée d'un métal, d'une résine armée de fibres d'élastomère ou d'un matériau composite thermostructural.

La structure peut également être effacée progressivement afin d'optimiser la détente dans le divergent en fonction d'une diminution, également progressive, de la pression externe. On utilise alors pour la fabrication de la structure un ou plusieurs matériaux ablatables ayant une tenue éphémère aux gaz de combustion.

Selon un autre mode de réalisation de l'invention, le problème de l'influence du décollement de jet sur les capacités de déviation de poussée dans une tuyère à divergent mobile peut être résolu par la mise en place d'une pièce annulaire à l'extrémité du divergent au niveau de la section de sortie des gaz, la pièce comportant des parties en saillie vers l'intérieur du divergent de façon à former, lors du braquage du divergent, une surface supplémentaire pour l'application des efforts de pression exercés par le jet. Ainsi, même en présence d'un décollement de jet dans la tuyère, celui-ci peut être "accroché" par des parties de la pièce annulaire qui est solidaire du divergent. Cela permet au jet d'exercer une force plus importante sur le divergent en braquage et, par conséquent, de compenser la diminution des efforts de pression appliqués sur la paroi du divergent en cas de décollement de jet.

La forme, le nombre et les dimensions des parties saillantes de la pièce annulaire sont définis de préférence en fonction du niveau de la force de compensation que l'on souhaite obtenir lors du décollement du jet de la paroi interne du divergent.

De même que pour la structure interne décrit précédemment, la pièce annulaire peut être fixée au divergent par des moyens de liaison permanent ou par des systèmes de fixation dont la rupture peut être commandée à un instant déterminé.

Pour une disparition progressive, la pièce peut être réalisée en un matériau ayant une tenue éphémère aux gaz de combustion de manière à disparaître progressivement au contact de ces derniers.

L'invention a également pour objet une tuyère à divergent mobile équipée d'un des dispositifs d'adaptation décrits ci-dessus.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue très schématique, en coupe axiale, d'une tuyère à divergent mobile illustrant le phénomène de décollement de jet dans le divergent,
- la figure 2 est une vue très schématique, en coupe axiale, d'une tuyère équipée d'un dispositif d'adaptation conformément à un premier mode de réalisation de l'invention,
- les figures 3A, 3B, 4A et 4B sont des vues très schématiques illustrant deux variantes de réalisation du dispositif de la figure 2, et
- les figures 5A et 5B sont des vues très schématiques d'une tuyère équipée d'un dispositif d'adaptation conformément à un deuxième mode de réalisation de l'invention.

### Description détaillée des modes de réalisation de l'invention

La figure 2 illustre très schématiquement la partie arrière d'un moteur fusée comprenant une enveloppe 210 entourant une chambre de combustion 211 dans laquelle est logé un bloc de propergol solide (non représenté). La chambre 211 s'ouvre à travers son fond arrière 213 à l'avant d'une tuyère comprenant un col 212 et un divergent 220.

Le col 212, qui définit non seulement le col de tuyère proprement dit mais aussi le convergent et une amorce de divergent, est fixé par exemple par vissage dans une bague 214 fixée au fond 213 de l'enveloppe, de manière à être solidaire du fond 213.

Le divergent 220 de tuyère est monté de façon mobile sur le col 212 de tuyère qui est solidaire de l'enveloppe 210. Le divergent mobile comprend typiquement une enveloppe 221 qui peut être par exemple métallique munie d'une couche interne 223 en matériau isolant tel qu'un composite ablatif par exemple composé de renfort carbone ou silice et d'une matrice en résine phénolique. A son extrémité amont, le divergent mobile 220 comprend une pièce 224 en forme de bague interne réalisée typiquement en matériau composite thermostructural. Le col 212 et le divergent mobile 220 sont en contact mutuel par des surfaces sphériques respectives 212a, 224a centrées sur l'axe 215 de la tuyère. Le divergent 220 est alors mobile sur le col 212 suivant plusieurs directions. Ainsi en braquant le divergent, on oriente la poussée en fonction de l'angle formé entre l'axe 225 du divergent et l'axe 215 de la tuyère.

Le divergent mobile de tuyère est relié à la partie fixe de celle-ci par l'intermédiaire d'une liaison mécanique (non représentée) comprenant des moyens d'actionnement (ex. des vérins) qui permettent de commander le braquage du divergent. Ce type de montage formant une tuyère à divergent mobile est bien connu en soi et ne sera pas décrit plus en détail. Un exemple de réalisation d'une telle tuyère est notamment décrit dans la demande de brevet français FR 02 08370.

D'autres types de montage et d'actionnement connus d'un divergent mobile sur une partie fixe de tuyère peuvent bien entendu être envisagés.

La tuyère orientable par divergent mobile est avantageuse en ce qu'elle permet d'amplifier la déviation de poussée en fonction de l'angle effectif de pivotement de l'axe principal du divergent. Toutefois, comme expliqué précédemment, cette capacité de déviation de poussée diminue significativement en présence d'un décollement de jet. En effet, lorsqu'il existe un espace entre le jet et la paroi interne du divergent comme illustré à la figure 1, l'impact du jet sur le divergent est très limité en raison de sa faible surface de contact avec le divergent. Plus précisément, en présence d'un décollement de jet dans le divergent, l'influence du braquage du divergent sur l'orientation du vecteur de poussée reste limitée tant que le braquage demeure dans une plage angulaire qui ne permet au jet de recoller substantiellement la paroi interne du divergent.

En d'autres termes, en cas de décollement de jet, la capacité optimale de déviation de poussée ne se retrouve qu'au delà d'un certain angle de braquage α (figure 1) qui est fonction de l'espace présent entre le jet et la paroi interne du divergent. Si le débattement de la tuyère est insuffisant pour recoller le jet sur la paroi interne du divergent, le pilotage de l'engin peut alors devenir très difficile puisque l'angle de braquage maximum du divergent est inférieur à l'angle de braquage nécessaire pour recoller efficacement le jet sur le divergent.

Conformément à un premier mode de réalisation de l'invention, une structure 230 est introduite dans le divergent 220 de la tuyère. Cette structure 230 permet de réduire la veine du divergent afin de prévenir le décollement du jet lorsque la pression externe est telle qu'elle conduirait normalement au décollement de jet en l'absence d'une telle structure. La forme et les dimensions de la structure 230 peuvent être très variées suivant le profil de la veine que l'on souhaite obtenir notamment pour optimiser l'efficacité en braquage.

On peut toutefois définir que la structure 230 présente de préférence une forme externe 230b proche de celle de la partie mobile du divergent où elle doit être disposée et une forme interne 230a qui conserve une structure sensiblement divergente afin d'assurer une bonne détente des gaz de combustion. L'épaisseur de la structure 230 sera déterminée de manière à combler l'espace entre le jet et la paroi interne du divergent lors du décollement du jet. Cette épaisseur est de préférence déterminée pour combler l'espace maximum qui peut exister entre le jet et le divergent lors du décollement. Le décollement maximum apparaît à la pression externe la plus élevée rencontrée au cours du vol. A titre d'exemple, pour un missile destiné à être lancé en immersion, l'épaisseur de la structure 230 sera calculée pour combler l'espace présent à la profondeur de tir qui correspond à la pression externe la plus élevée durant la phase de vol.

La structure 230 peut être fixée au divergent par des organes de fixation 232 tels que des organes boulons par exemple. Dans ce cas, la structure 230 comprend une collerette 231 qui coopère avec une collerette 2231 de la protection interne 223 du divergent. Selon une variante, la collerette 231 peut être fixée à une collerette de l'enveloppe 221 du divergent. Ces collerettes sont de préférence formées vers l'extérieur à la sortie du divergent, c'est-à-dire en dehors de la veine de la tuyère, pour ne pas perturber l'écoulement.

La structure 230 peut être présente pendant toute la durée du vol ou bien disparaître à un instant déterminé à partir duquel les capacités en braquage naturelles du divergent mobile sont compatibles avec les besoins en pilotage de l'engin notamment afin d'optimiser les performances propulsives du moteur. Si le dispositif s'adaptation est conservé pendant toute la durée du vol, la structure 230 et la protection interne 23 peuvent constituer qu'un seul élément. Avec le mode de réalisation de la figure 2, les organes de fixation 232 peuvent être équipés d'un système pyrotechnique de boulons explosifs ou d'un cordeau découpant en extrémité du divergent ou bien de tout autre système mécanique pour commander l'expulsion de la structure à un instant déterminé. Alternativement, la structure 230 peut être constituée d'un matériau ablatable permettant une disparition progressive de la structure. Dans le cas d'un missile lancé en immersion par exemple, cela permet d'avoir un profil de veine qui s'agrandit au fur et à mesure que la pression externe diminue, optimisant ainsi la détente des gaz et, par conséquent, la performance propulsive au cours du vol.

La modification progressive de la veine en cours de mission peut être également obtenue avec une structure composée de plusieurs sousensembles emboîtés les uns dans les autres et largables successivement à des instants déterminés de la mission. A cet effet, chaque sous-ensemble peut être fixé au sous-ensemble voisin ou au divergent par des organes de liaison dont la rupture peut être commandée.

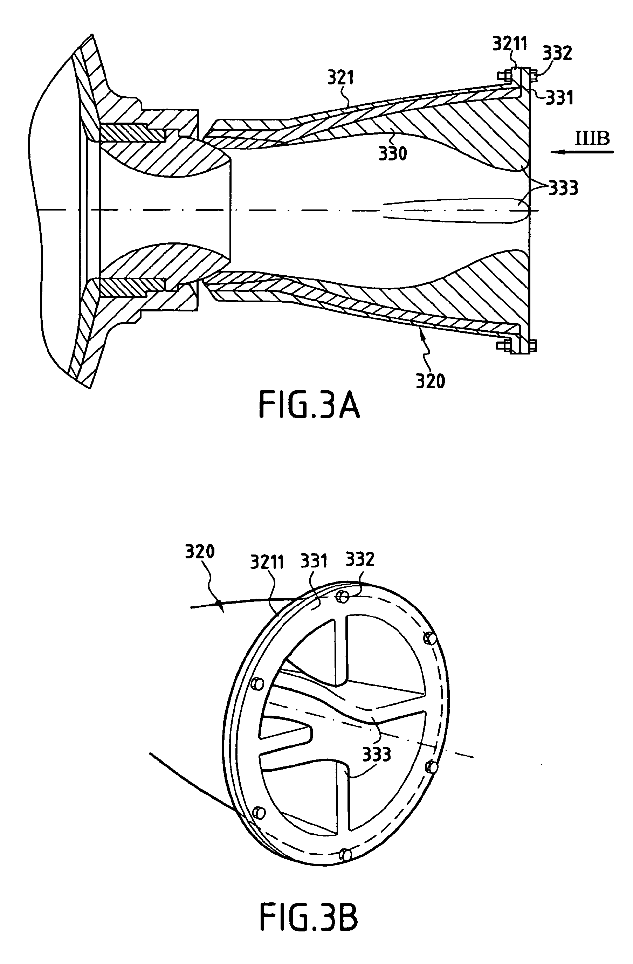

Le mode de réalisation présenté aux figures 3A et 3B se distingue notamment de celui de la figure 2 en ce que la structure interne disposée à l'intérieur du divergent présente une forme non axisymétrique dans sa partie aval. Dans ce mode de réalisation, la structure 330 comporte dans sa partie aval des protubérances 333 qui font saillie dans la veine de la tuyère au voisinage de la sortie du divergent. Afin de ne pas trop perturber l'écoulement et de conserver une poussée uniforme, les protubérances 333 sont profilées en forme d'ailettes et réparties uniformément autour de l'axe de la structure 330. Les protubérances 333 forment ainsi des obstacles pour le jet à l'intérieur du divergent. Cela permet au jet d'être toujours en contact avec un élément solidaire du divergent et, par conséquent, de permettre une déviation de poussée efficace même en présence d'un décollement de jet.

Comme pour la structure 230 de la figure 2, la structure 330 est maintenue à l'intérieur du divergent par des organes de fixation 332 de type boulonnerie insérés dans des trous percés sur la collerette 331 de la structure, d'une part, et sur une collerette 3211 de l'enveloppe externe 321 du divergent d'autre part. La structure 330 est ici fixée, par l'intermédiaire d'une collerette 3211, sur l'enveloppe externe 321 du divergent plutôt que sur sa protection interne comme illustré à la figure 2.

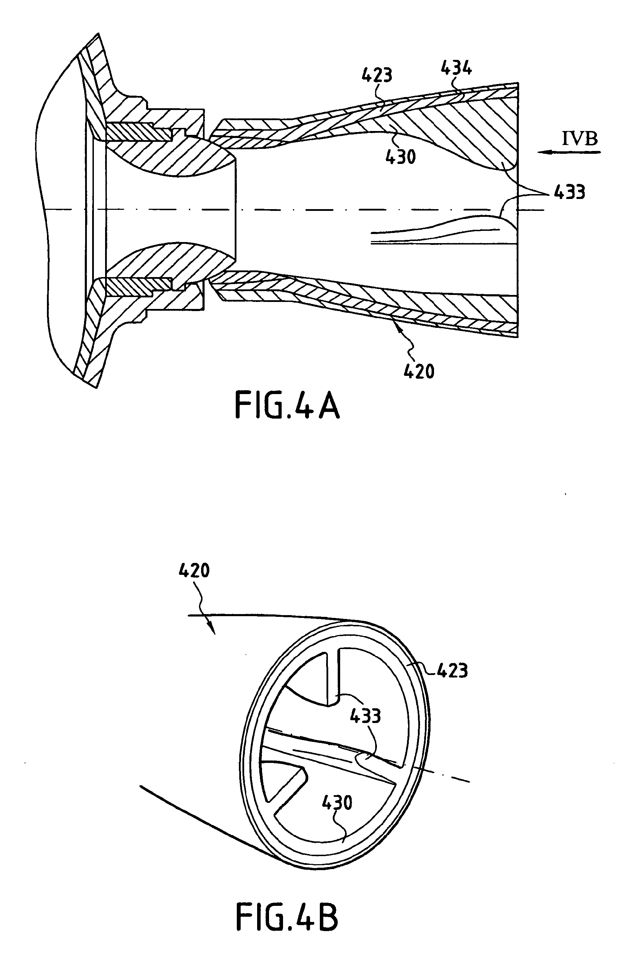

Les figures 4A et 4B illustrent une autre variante de réalisation de structure permettant d'accrocher le jet dans le divergent conformément à l'invention. Dans, ce mode de réalisation la structure 430 comporte trois protubérances 433 reparties uniformément dans la partie aval de la structure 430. Outre le nombre de protubérances, la structure 430 diffère de celle représentée sur les figures 3A et 3B en ce qu'elle est fixée par collage au moyen d'une couche d'adhésif 434 déposée sur la protection interne 430 du divergent 420. Dans ce cas, la structure de l'ensemble est simplifiée puisqu'on ne forme pas de collerette de fixation sur la structure d'accroche de jet et sur l'enveloppe du divergent ou de sa protection interne. La liaison collée peut être renforcée si nécessaire par des pions (non représentés) perpendiculaires à l'axe de la tuyère et pénétrant dans la structure sans toutefois déboucher dans la veine d'écoulement. La structure 430 est avantageusement réalisée en matériau ablatable.

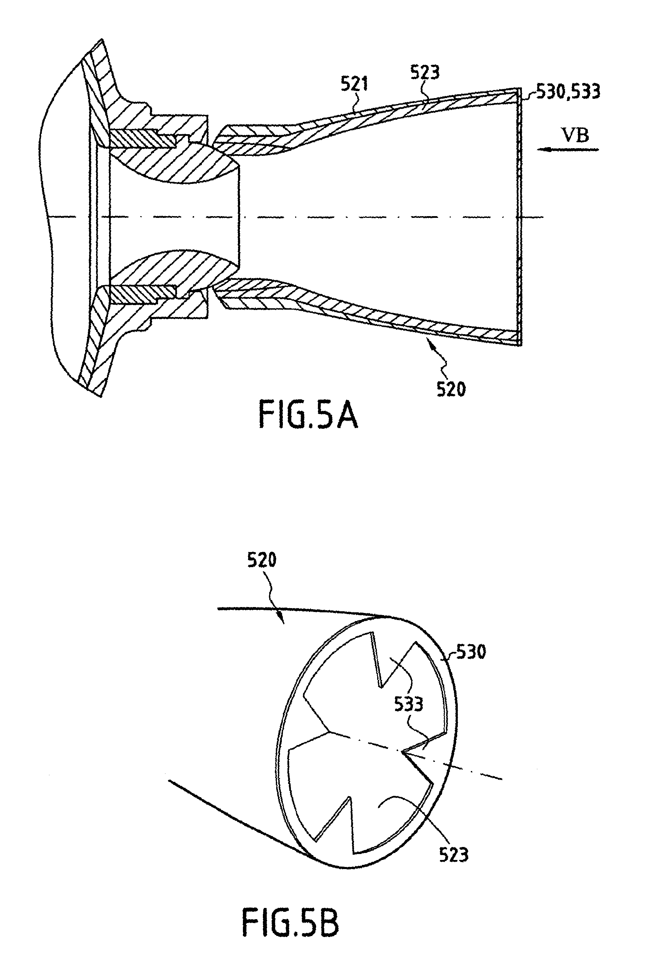

Conformément à l'invention, le problème de pilotabilité de la tuyère en cas de décollement de jet peut être aussi résolu avec des dispositifs qui sont disposés non pas à l'intérieur du divergent mais à la sortie de celui-ci. Comme illustré sur les figures 5A et 5B, le divergent 520 peut être adapté avec une pièce annulaire 530 qui est fixée à l'extrémité du divergent 520 au niveau de la section de sortie des gaz. La pièce annulaire 530 comporte des projections 533 qui s'étendent vers l'intérieur du divergent. En cas de décollement de jet dans le divergent, les projections sont utilisées comme surfaces supplémentaires d'application pour les efforts de pression exercés par le jet des gaz de combustion éjecté. En effet, lorsqu'on braque le divergent dans une direction, le jet va venir frapper une ou plusieurs de ces projections sur une surface plus ou moins importante selon l'angle de braquage appliqué. En disposant la pièce annulaire à l'extrémité du divergent au niveau de la section de sortie des gaz, on crée un bras de levier important entre le point d'appui de la force exercée par le jet et le centre de giration du divergent, ce qui facilite le pilotage.

La géométrie de la pièce annulaire (forme, nombre et disposition de projections, ...) peut être très variée. Elle est principalement définie en fonction des besoins en terme de déviation de poussée.

Comme pour le mode de réalisation et ses variantes présentés dans les figures 2 à 4, la pièce annulaire peut être présente pendant toute la phase de vol ou disparaître à un instant déterminé. La pièce peut donc être fixée au divergent par des organes de liaison équipés éventuellement de moyens pour commander l'expulsion de la structure à un instant déterminé. Alternativement, la pièce annulaire peut être constituée d'un matériau ablatable permettant une disparition progressive de la structure en cours de vol.

Quel que soit le type de dispositif d'adaptation de l'invention considéré (i.e. insert dans le divergent ou pièce annulaire en extrémité du divergent), le choix du matériau constitutif est varié. Il dépend notamment des gaz et températures rencontrés ainsi que du mode d'élimination choisi. Il peut être métallique, composite à matrice organique constitué de fibres de verre, d'aramide, de polyéthylène ou autre et de résine telle qu'une résine époxy, phénolique ou bien encore en élastomère ou en matériau composite thermostructuraux tels que du carbone/carbone (C/C) ou du carbone/carbure de silicium (C/SiC). Dans le cas d'un matériau devant s'ablater sous l'effet des gaz de combustion, on choisira par exemple un matériau qui se sublime sous l'effet des gaz chauds tel qu'un matériau composite du type résine renforcée par des fibres de verre ou un métal facilement sublimable, tel que l'aluminium.

## Revendications

1. Tuyère de moteur fusée comprenant un divergent (220) monté de façon mobile sur le col (212) de tuyère afin de réaliser une déviation de poussée par braquage du divergent (220) de manière à dévier le jet des gaz de combustion au contact de la paroi interne du divergent, **caractérisée en ce que** la tuyère est équipée d'un dispositif d'adaptation comprenant une structure (230) disposée à l'intérieur du divergent (220) de façon à réduire le caractère divergent de la veine de celui-ci et à augmenter la zone d'application des efforts de pression exercés par le jet sur le divergent lors du braquage de celui-ci.

2. Tuyère selon la revendication 1, **caractérisée en ce que** la structure (230) présente une forme axisymétrique de révolution.

3. Tuyère selon la revendication 1, **caractérisée en ce que** la structure (330) comprend en outre des protubérances (333) en forme d'ailettes disposées uniformément sur la structure au voisinage de la section de sortie des gaz du divergent (320).

4. Tuyère selon l'une des revendications 1 à 3, **caractérisée en ce que** la structure (230) est fixée au divergent par des moyens de liaison (232) et **en ce que** des moyens sont prévus pour commander la rupture par un système mécanique ou pyrotechnique desdits moyens de liaison à un instant déterminé.

5. Tuyère selon l'une des revendications 1 à 3, **caractérisée en ce que** la structure est formée d'une pluralité d'éléments emboîtés les uns dans les autres et **en ce que** chaque élément est fixé par des moyens de liaison dont la rupture peut être commandée à un instant déterminé.

6. Tuyère selon l'une des revendications 1 à 5, **caractérisée en ce que** la structure (230) est constituée d'un métal, d'une résine armée de fibres d'élastomère ou d'un matériau composite thermostructural.

7. Tuyère selon l'une des revendications 1 à 3, **caractérisée en ce que** la structure (230) est réalisée en un matériau ayant une tenue éphémère aux gaz de combustion de manière à disparaître progressivement au contact de ces derniers.

8. Tuyère de moteur fusée comprenant un divergent (520) monté de façon mobile autour d'une partie fixe de celle-ci afin de réaliser une déviation de poussée par braquage du divergent (520) de manière à dévier le jet des gaz de combustion au contact de la paroi interne du divergent, **caractérisée en ce que** la tuyère est équipée d'un dispositif d'adaptation comprenant une pièce annulaire (530) est fixée à l'extrémité du divergent au niveau de la section de sortie des gaz, ladite pièce annulaire (530) comportant des parties en saillie (533) vers l'intérieur du divergent de façon à former, lors du braquage du divergent, une surface supplémentaire solidaire du divergent pour l'application des efforts de pression exercés par le jet.

9. Tuyère selon la revendication 8, **caractérisée en ce que** la pièce annulaire (530) est fixée au divergent par des moyens de liaison et **en ce que** des moyens sont prévus pour commander la rupture desdits moyens de liaison à un instant déterminé par un système mécanique ou pyrotechnique.

10. Tuyère selon la revendication 8 ou 9, **caractérisée en ce que** la pièce annulaire (530) est constituée d'un métal, d'une résine armée de fibres d'élastomère ou d'un matériau composite thermostructural.

11. Tuyère selon la revendication 8, **caractérisée en ce que** la pièce annulaire (530) est réalisée en un matériau ayant une tenue éphémère aux gaz de combustion de manière à disparaître progressivement au contact de ces derniers.

## Claims

1. A nozzle for rocket engine comprising a diverging portion (220) that is movably mounted relative to a throat (212) of the nozzle so as to deflect the jet of combustion gas in contact with the inside wall of the diverging portion, the nozzle being **characterized in that** a structure (230) is disposed inside the diverging portion (220) so as to reduce the diverging nature of the flow section thereof and so as to increase the area over which pressure forces are exerted by the jet on the diverging portion when the diverging portion is swiveled.

2. A nozzle according to claim 1, **characterized in that** the structure (230) is in the form of an axially symmetrical body of revolution.

3. A nozzle according to claim 1, **characterized in that** the structure (330) further comprises protuberances (333) in the form of fins disposed uniformly on the structure in the vicinity of the gas outlet section from the diverging portion (320).

4. A nozzle according to any one of claims 1 to 3, **characterized in that** the structure (230) is fastened to the diverging portion by connection means (232), and **in that** means are provided for causing said connection means to rupture at a determined instant by using a mechanical or a pyrotechnic system.

5. A nozzle according to any one of claims 1 to 3, **characterized in that** the structure is made up of a plurality of elements engaged one in another, and **in that** each element is fastened by connection means that can be controlled to rupture at a determined instant.

6. A nozzle according to any one of claims 1 to 5, **characterized in that** the structure (230) is constituted by a metal, a resin reinforced by elastomer fibers, or a thermostructural composite material.

7. A nozzle according to any one of claims 1 to 3, **characterized in that** the structure (230) is made of a material that is ephemeral in the presence of combustion gas so as to disappear progressively in contact therewith.

8. A nozzle for rocket engine comprising a diverging portion (520) movably mounted relative to a stationary portion of the nozzle so as to perform thrust deflection by swivelling the diverging portion (520) in such a manner as to deflect the combustion gas jet in contact with the internal wall of the diverging portion, the nozzle being **characterized in that** it comprises an adapter device comprising an annular part (530) fastened to the end of the diverging portion at the gas outlet section, said annular part (530) having portions (533) projecting towards the inside of the diverging portion so as to form, during swivelling of the diverging portion, an additional area secured to the diverging portion and against which the pressure forces exerted by the jet can bear.

9. A nozzle according to claim 8, **characterized in that** the annular part (530) is fastened to the diverging portion by connection means, and **in that** means are provided for causing said connection means to rupture at a determined instant by means of a mechanical or a pyrotechnic system.

10. A nozzle according to claim 8 or claim 9, **characterized in that** the annular part (530) is made of a metal, an elastomer fiber reinforced resin, or a thermostructural composite material.

11. A nozzle according to claim 8, **characterized in that** the annular part (520) is made of a material that is ephemeral in the presence of combustion gas so as to disappear progressively in contact therewith.

## Patentansprüche

1. Düse eines Raketentriebwerks, umfassend ein divergentes Düsenteil (220), das an dem Düsenhals (212) beweglich angebracht ist, um eine Schubumleitung durch Auslenken des divergenten Düsenteils (220) zu vollziehen, so daß der Strahl der Verbrennungsgase in Kontakt mit der Innenwandung der divergenten Düsenteils geleitet wird, **dadurch gekennzeichnet, daß** die Düse mit einer Anpassungsvorrichtung ausgestattet ist, die eine Struktur (230) umfaßt, welche innerhalb des divergenten Düsenteils (220) angeordnet ist, so daß der divergente Charakter seines Kanals verringert und der Bereich des Anlegens der Druckkräfte, die durch den Strahl während des Auslenkens des divergenten Düsenteils auf dieses ausgeübt werden, vergrößert wird.

2. Düse nach Anspruch 1, **dadurch gekennzeichnet, daß** die Struktur (230) eine axialsymmetrische Rotationsform aufweist.

3. Düse nach Anspruch 1, **dadurch gekennzeichnet, daß** die Struktur (330) ferner flügelförmige Vorsprünge (333) umfaßt, die an der Struktur in der Nähe des Gasaustrittsquerschnitts des divergenten Düsenteils (320) gleichmäßig angeordnet sind.

4. Düse nach einem der Ansprüche 1 bis 3, **dadurch gekennzeichnet, daß** die Struktur (230) durch Verbindungsmittel (232) an dem divergenten Düsenteil befestigt ist und daß Mittel vorgesehen sind, um das Zubruchgehen der Verbindungsmittel durch ein mechanisches oder pyrotechnisches System zu einem bestimmten Zeitpunkt zu steuern.

5. Düse nach einem der Ansprüche 1 bis 3, **dadurch gekennzeichnet, daß** die Struktur von einer Vielzahl von ineinander gesteckten Elementen gebildet ist und daß jedes Element durch Verbindungsmittel befestigt ist, deren Zubruchgehen zu einem bestimmten Zeitpunkt gesteuert werden kann.

6. Düse nach einem der Ansprüche 1 bis 5, **dadurch gekennzeichnet, daß** die Struktur (230) aus einem Metall, aus einem mit Elastomerfasern verstärkten Harz oder aus einem hochtemperaturbeständigen Verbundwerkstoff besteht.

7. Düse nach einem der Ansprüche 1 bis 3, **dadurch gekennzeichnet, daß** die Struktur (230) aus einem Material mit einer vorübergehenden Widerstandsfähigkeit gegenüber den Verbrennungsgasen besteht, so daß es bei Kontakt mit diesen schrittweise verschwindet.

8. Düse eines Raketentriebwerks, umfassend ein divergentes Düsenteil (520), das um ein festes Teil derer beweglich angebracht ist, um eine Schubumleitung durch Auslenken des divergenten Düsenteils (520) zu vollziehen, so daß der Strahl der Verbrennungsgase in Kontakt mit der Innenwandung der divergenten Düsenteils geleitet wird, **dadurch gekennzeichnet, daß** die Düse mit einer Anpassungsvorrichtung ausgestattet ist, die ein ringförmiges Teil (530) umfaßt, das am Ende des divergenten Düsenteils im Bereich des Gasaustrittsquerschnitts befestigt ist, wobei das ringförmige Teil (530) zum Inneren des divergenten Düsenteils vorspringende Teile (533) aufweist, so daß beim Auslenken des divergenten Düsenteils eine mit dem divergenten Düsenteil fest verbundene zusätzliche Fläche für das Anlegen der durch den Strahl ausgeübten Druckkräfte gebildet wird.

9. Düse nach Anspruch 8, **dadurch gekennzeichnet, daß** das ringförmige Teil (530) durch Verbindungsmittel an dem divergenten Düsenteil befestigt ist und daß Mittel vorgesehen sind, um das Zubruchgehen der Verbindungsmittel zu einem bestimmten Zeitpunkt durch ein mechanisches oder pyrotechnisches System zu steuern.

10. Düse nach Anspruch 8 oder 9, **dadurch gekennzeichnet, daß** das ringförmige Teil (530) aus einem Metall, aus einem mit Elastomerfasern verstärkten Harz oder aus einem hochtemperaturbeständigen Verbundwerkstoff besteht.

11. Düse nach Anspruch 8, **dadurch gekennzeichnet, daß** das ringförmige Teil (530) aus einem Material mit einer vorübergehenden Widerstandsfähigkeit gegenüber den Verbrennungsgasen besteht, so daß es bei Kontakt mit diesen schrittweise verschwindet.
